# FASCICULE DE BREVET EUROPEEN

(11) **EP 3 048 892 B1**
(45) Date de publication et mention de la délivrance du brevet: **17.03.2021**
(21) Numéro de dépôt: 14796187.4
(22) Date de dépôt: 24.09.2014
(51) Int. Cl.: A21D 8/06, A21B 1/02, A21B 3/15

(54) **PROCÉDÉ DE CUISSON DE PRODUITS DE BOULANGERIE, VIENNOISERIE ET PÂTISSERIE AVEC PRÉCHAUFFAGE DIRECT, ET SES DISPOSITIFS DE MISE EN OEUVRE**
VERFAHREN ZUM BACKEN VON BROTEN, FEINBACKWAREN UND TEIGWAREN MIT DIREKTER VORWÄRMUNG SOWIE VORRICHTUNGEN ZUR DURCHFÜHRUNG DIESES VERFAHRENS
METHOD FOR BAKING BREAD, VIENNOISERIE AND PASTRY PRODUCTS WITH DIRECT PREHEATING, AND DEVICES FOR IMPLEMENTING SAID METHOD

(30) Priorité: 24.09.2013 FR 1359147
(43) Date de publication de la demande: 03.08.2016
(73) Titulaire: MECATHERM, 67130 Barembach (FR)
(72) Inventeur: ZORN, Bernard, F-67700 Saverne (FR)
(74) Mandataire: Hugues, Catherine
(86) Numéro de dépôt international: PCT/FR2014/052391
(87) Numéro de publication internationale: WO 2015/044587

(56) Documents cités:
- DE-A1- 3 903 901
- FR-A- 769 433
- GB-A- 187 506
- GB-A- 363 713
- GB-A- 404 142
- GB-A- 2 276 073
- IL-A- 77 164
- US-A- 1 716 460
- US-A- 2 143 525
- US-A- 2 237 102
- US-A- 2 369 840
- US-A- 4 904 492
- US-A- 5 453 287
- DATABASE WPI Week 201263 Thomson Scientific, London, GB; AN 2012-M49731 XP002724858, & JP 2012 165687 A (MIWA KK) 6 septembre 2012 (2012-09-06) & JP 2012 165687 A (MIWA KK) 6 septembre 2012 (2012-09-06)

## Description

La présente invention entre dans le domaine de la cuisson des produits de boulangerie, pâtisserie ou viennoiserie.

Dans le domaine de la boulangerie, la pâte subit une étape de division en pâtons puis de façonnage de ces derniers qui sont alors déposés soit sur des supports servant uniquement au transport et à la manutention des pâtons pendant l'étape de fermentation jusqu'à l'entrée de l'enceinte de cuisson où lesdits pâtons sont prélevés de ces supports pour être déposés directement sur une sole chaude, soit sur des plaques, servant à leur transport, aussi bien au travers d'une étape de fermentation qu'au travers du four de cuisson, voire au travers des étapes de refroidissement et de surgélation postérieures à la cuisson : on parle alors de production sur plaques et, en l'occurrence, sur des plaques dites « de cuisson ».

L'invention se limite exclusivement à ce type de plaques de cuisson.

Il existe de nombreux types de plaques de cuisson. En particulier, une plaque peut être constituée d'un matériau support monté solidaire et supporté en partie supérieure d'un cadre, constituant alors un châssis assurant la rigidité de l'ensemble en vue de sa manutention.

En particulier, le matériau est conformé, notamment par pliage, de manière à ménager des logements de réception desdits pâtons. Une forme spécifique consiste en une ondulation de ce matériau support, formant des logements en creux s'étendant longitudinalement d'un bord à l'autre de la plaque et parallèlement entre eux, deux logements adjacents étant séparés par la crête d'une onde. En outre, les extrémités desdits logements sont ouvertes, s'apparentant alors à des goulottes ou gouttières, reliées les unes aux autres aux niveaux de leurs bords supérieurs contigus.

Dès lors, un même logement peut recevoir sur sa longueur un ou plusieurs pâtons, alors espacés les uns des autres, en fonction de la longueur de la plaque et des dimensions du ou desdits pâtons. En fonction de sa largeur, une plaque comprend alors plus ou moins de logements.

De plus, ledit matériau support est généralement métallique avec un revêtement antiadhésif et peut être constitué d'un treillis ou maillage, ou bien par une tôle pleine ou perforée. Dans ce dernier cas, une tôle présente des trous ou orifices réalisés régulièrement sur l'ensemble de sa surface. Ces perforations assurent, d'une part, la bonne transmission par convexion de la chaleur depuis la sole du four vers les produits supportés par la plaque et, d'autre part, l'évacuation par le bas, d'une part, de l'humidité contenue dans la pâte avant et surtout au cours de sa cuisson et, d'autre part, les perforations de la plaque permettent d'évacuer les condensats de vapeur qui se forment dès l'enfournement à l'entrée du four, sur les pâtons et sur la plaque proprement dite jusqu'à ce qu'elle atteigne la température du point de rosée.

Toutefois, si les produits cuits sur une plaque perforée ou maillée présentent une qualité de cuisson optimale, les perforations ou le maillage provoquent un marquage du produit par le dessous, lui donnant une impression de cuisson industrielle et lui conférant un aspect peu esthétique.

Afin de résoudre ce problème de marquage, on envisage la cuisson sur des tôles pleines, conférant un aspect lisse comme si le produit avait été cuit sur sole, que cette sole soit en acier ou en pierre. Toutefois, ces tôles pleines présentent d'autres inconvénients.

Dans un premier temps, comme la tôle est pleine, en partie inférieure de chaque logement, l'humidité des pâtons ne s'évacue pas avant et surtout pendant la cuisson. Le dessous du produit se retrouve alors moins cuit par rapport à son dessus ou ses flancs. Le produit conserve sur son dessous les traces de résidus d'eau qui ne peut pas s'évacuer assez vite et assez tôt lors du processus de cuisson, formant sous le produit des petites cavités caractéristiques de la cuisson sur plaque pleine, alors que par opposition, la cuisson obtenue par la dépose du pâton fermenté directement sur la sole chaude en pierre ou en acier d'un four, donne au pain une « semelle » lisse et uniforme, sans cratère ni creux.

Dans le cas d'une cuisson sur plaque pleine, et particulièrement quand il s'agit d'une plaque alvéolée ou à empreinte, il y a une forte condensation de la vapeur au moment de l'entrée dans le four qui ruisselle sur les pâtons et qui se forme au contact de la plaque froide elle-même. Ce ruissellement coule dans le fond des empreintes ou des alvéoles et ne s'évacue qu'au bout de quelques minutes de cuisson sous l'effet de la température du four. Dans un second temps, sans perforation, la cuisson au niveau inférieur du pâton ne s'effectue plus que par conduction au contact de la plaque, tandis qu'aux niveaux latéraux, elle s'effectue par l'intermédiaire de l'air chaud ambiant du four. La convexion verticale ascendante ne traverse plus la plaque pleine, diminuant la qualité de cuisson du produit.

Ces phénomènes n'apparaissent pas sur des plaques perforées, ce qui en explique l'usage industriel généralisé, mais ce qui a pour inconvénient de connoter négativement et industriellement le produit.

Notre invention consiste en un préchauffage puissant et dosé des plaques pleines garnies de pâtons juste avant l'enfournement, ce qui a pour effet de supprimer les inconvénients précédemment décrits et confère au produit cuit l'aspect de produits non industriels cuit sur sole.

Il est à noter que pour une production dite « sur sole », le chauffage ou le réchauffage de la sole du four avant enfournement des pâtons est une obligation systématique pour tous les fours de boulangerie car dans ce principe de cuisson, il faut déposer le pâton fermenté directement sur une sole préalablement chauffée. En cas de défaut de chaleur de cette sole, le produit resterait plat pendant sa cuisson - sans développement - et il faudrait un temps de cuisson anormalement long. Dans le cas d'un enfournement sur une sole tiède, moins de 80°C environ, la pâte enfournée colle à la sole et le produit n'est plus défournable.

L'état de la technique comporte différents systèmes qui ont été développés spécialement pour la cuisson sur sole sur des fours tunnels industriels, pour lesquels l'enfournement doit se faire en continu sur un tapis de cuisson en continu dont le retour se fait généralement en dehors de la chambre de cuisson et sur une durée équivalente au temps de cuisson, ce qui signifie que sans réchauffage de ce tapis en continu, la cuisson sur sole ne serait tout simplement pas possible.

Il est connu du document GB 187 506 décrit une sole pleine sous forme d'une bande constituant un convoyeur sans fin continu traversant à la fois une enceinte de fermentation et une enceinte de cuisson. Avant l'entrée, cette bande passe au-dessus de moyens de préchauffage que l'on voit dans ce document s'étendre depuis l'intérieur du four jusqu'à dans l'enceinte de fermentation.

De même, on connait au travers du document US 2 143 525 un convoyeur sous forme de lames articulées, définissant une sole pleine continue traversant un four de cuisson et sur laquelle sont déposés directement les produits à cuire en amont du four. Précisément, à l'entrée du four, sont positionnés des moyens de préchauffage dudit convoyeur, afin d'atteindre une température suffisante pour, lors de la dépose des produits, saisir leur partie inférieure, évitant qu'ils ne collent.

Une autre solution connue décrite dans le document JP 2012 165 687 vise uniquement la cuisson d'un produit d'un type spécifique, à savoir une pizza de type « napolitaine ».

D'ores et déjà, on notera que la cuisson d'une pizza n'a pas du tout les mêmes besoins thermiques que pour un pain. Un produit de type pizza napolitaine n'augmente quasiment pas de volume lors de sa cuisson au four, car la pâte ne nécessite quasiment aucune étape de fermentation (comme la fermentation panaire). Par ailleurs, un pâton pour pizza est mis en forme de disque, d'une épaisseur de 5 à 10 mm pour un diamètre d'une trentaine de centimètres, conférant une surface de contact très grande de l'ordre de 100 cm² avec son support ou directement avec la sole du four. De plus, le disque de pâte est généralement recouvert d'une garniture, à l'entrée du four, qu'il convient de cuir simultanément, à des températures bien plus élevées, de l'ordre de 400 à 600°C, sur une période plus courte, de l'ordre d'une à deux minutes. En outre, il n'y a aucune précaution particulière à prendre pour éviter une quelconque détérioration, autant qualitative qu'esthétique, du produit lors de sa cuisson, puisqu'il n'y a aucun développement de la pâte au four. Dès lors, le chauffage peut être extrêmement agressif. Il est possible de chauffer rapidement et très fortement le support recevant la pizza, pour saisir sa face inférieure, comme indiqué dans ce document sur une durée inférieure à 10 secondes à une température de l'ordre de 400°C.

Par ailleurs, afin de compléter la cuisson d'une pizza, étant donné le peu de fragilité d'un tel produit, il est possible, comme exposé dans ce document, d'augmenter l'apport thermique par injection de fluides caloriporteurs de façon violente, à savoir en injection de la vapeur surchauffée sous haute pression, à une température de 500 à 600°C à une pression d'environ 6 kg/cm².

De ces contraintes spécifiques à la cuisson d'un produit de type pizza « napolitaine », un système spécifique a été développé, décrit dans le document JP 2012 165 687. Un module de préchauffage vient là aussi chauffer la sole, formant un tapis sans fin d'approvisionnement d'une enceinte de cuisson. De plus, la température de préchauffage est très élevée, de 200 à 600 °C pour une durée très courte, de 3 à 15 secondes, entièrement dédiées à la cuisson spécifique de la partie inférieure d'une pizza, dont la pâte doit être saisie, pour reproduire la cuisson d'un four traditionnel avec une sole en pierre.

De tels systèmes ne sont clairement pas adaptés à la cuisson de produits de boulangerie, pâtisserie ou viennoiserie. En effet, un pâton « boulanger » double voire triple de volume pendant la première partie de sa cuisson, phénomène dénommé « fin de la fermentation panaire ». Cette augmentation de volume nécessite quasi systématiquement une scarification, un marquage ou une perforation pour canaliser et permettre le dégagement de vapeur d'eau lors de la cuisson, évitant le déchirement non contrôlé de l'enveloppe extérieure, formant une peau qui constituera la croûte une fois le produit cuit.

En outre, un pâton de produit de boulangerie est extrêmement fragile entre sa fermentation et son enfournement, et cette fragilité est maximale à l'enfournement dans le four. Cette fragilité du pâton nécessite souvent une atmosphère saturée en humidité, afin que ladite peau ne se dessèche pas, évitant le phénomène de « croûtage ». Cette saturation est obtenue par l'intermédiaire d'une projection de vapeur mais à basse pression, de l'ordre de 0,3 à 0,5 bars, sans avoir une température trop importante. Une saturation supplémentaire en cours de cuisson, toujours à faible pression, peut être envisagée pour limiter les risques de déchirement de la peau en cours de fin de fermentation panaire. Cette étape est particulièrement nécessaire pour les pâtons de faibles dimensions.

A ce titre, un tel pâton se présente à l'entrée du four sous la forme globale d'un cylindre ou d'une boule, avec une densité faible, du fait de l'important réseau gazeux qui s'est développé intérieurement lors de l'étape préalable de fermentation. De plus, un tel pâton présente alors une surface de contact avec sa plaque support relativement faible par rapport à son volume total. Il n'est donc pas possible d'envisager un chauffage intense, qui viendrait saisir, voire griller ces parties inférieures en contact, au détriment d'une cuisson homogène du reste du pâton, donc au détriment de la pénétration de la chaleur dans le produit.

Le problème commun aux solutions connues réside encore dans le fait que le préchauffage de la sole formée par la bande du convoyeur, du fait du matériau généralement métallique la constituant, sous forme de lames, de treillis ou de maillage, n'a d'intérêt que pour la cuisson de produits directement déposés sur la sole. De telles solutions ne conviennent pas pour la cuisson sur des plaques qui sont appelées à traverser la fermentation, la cuisson, voire le refroidissement et la surgélation. Dans ce cas, cela pose de surcroît le problème de l'inertie thermique de la plaque de cuisson.

La présente invention a pour but de pallier les inconvénients de l'état de la technique, en proposant un procédé de cuisson de produits de boulangerie, pâtisserie ou viennoiserie spécifiquement prévu pour des plaques support pleine. Pour ce faire, selon une première démarche inventive, il a été imaginé d'effectuer un chauffage préalable de la plaque uniquement et directement par le dessous avant son entrée dans le four. Plus précisément, ce préchauffage intervient après que les pâtons ont été disposés sur la plaque, lorsque cette dernière arrive à l'entrée du four. Ce préchauffage se veut rapide et intense, de manière à élever la température de ladite plaque de façon quasiment instantanée. Ainsi, la plaque est déjà chaude au moment où elle entre dans le four.

Pour ce faire, ledit préchauffage consiste à soumettre directement ladite plaque à une forte élévation de température pendant une durée limitée.

Il a donc été imaginé de s'affranchir de la perte énergétique induite par le préchauffage au travers d'une sole, par des moyens de transport des plaques de cuisson offrant un accès direct aux plaques. Ces moyens de transport sont formés d'au moins deux chaînes sans fin espacées latéralement, sur lesquelles reposent directement lesdites plaques. Ces dernières se retrouvent alors directement préchauffées, au travers de cet espacement, par convection.

Ainsi, les plaques se retrouvent préchauffées par convexion, au lieu d'être chauffée par conduction. Une telle technique permet de s'affranchir du chauffage d'un matériau intermédiaire, induisant une inertie thermique coûteuse en temps et énergivore.

En particulier, le dispositif de préchauffage rapide de la plaque a une puissance qui permet une montée en température de ladite plaque à environ 100 degrés Celsius (°C) en un temps inférieur à 30 secondes, ce qui équivaut à une montée en température au minimum égale à 75 ou 80°C sur la durée d'environ 30 secondes pour une température initiale de la plaque de 20 à 25°C. Cette élévation de température sur cette durée est spécifique aux produits de boulangerie, viennoiserie et pâtisserie, en raison de leur forte teneur en eau et de la fréquente absence de matière grasse pour les produits de boulangerie. En comparaison des techniques existantes, la puissance de chauffe est moins importante et la durée d'exposition est plus longue.

Ainsi, au cours d'un tel procédé de cuisson, des pâtons ont été préalablement déposés sur une plaque support pleine, puis on transfère ladite plaque chargée de pâtons vers au moins une enceinte de cuisson, via une entrée. Il se caractérise en ce qu'il consiste à placer ladite plaque sur des moyens de transport pourvus d'au moins un espacement de chauffage et à préchauffer directement par le dessous ladite plaque au travers de chaque espacement de chauffage au niveau d'un poste de préchauffage situé au niveau de ladite entrée.

Cette étape de préchauffage permet d'évacuer, avant le début de la cuisson, l'humidité présente au niveau inférieur des pâtons et la montée en température de ladite plaque permet d'éviter la condensation de la vapeur contenue dans le four sur la plaque dont la température est élevée par le préchauffage au-dessus du point de rosée.

De façon additionnelle, ledit préchauffage peut s'effectuer par convection sur une première portion dudit poste de préchauffage.

De plus, ledit préchauffage peut s'effectuer par rayonnement sur une seconde portion dudit poste de préchauffage.

De plus, afin d'améliorer l'évacuation de l'humidité contenue dans le pâton, l'invention peut aussi envisager une étape complémentaire de farinage préalable, ladite farine étant saupoudrée sur la plaque avant la dépose des pâtons. Ce farinage permet d'absorber une partie de l'humidité du dessous des pâtons.

On notera que ce farinage ne correspond pas à sa fonction habituelle, telle qu'elle est pratiquée en production de pain « cuit sur sole » où les produits auront ferménté sur des plaques de fermentation et devront en être prélevés sans qu'ils collent à leur support de fermentation Avant leur dépose sur la sole chaude du four :
- ce farinage intervient usuellement sur un support de fermentation avant d'y déposer un pâton devant fermenter sur ce support pendant une durée prolongée ; puis
- il y a prélèvement de ce pâton fermenté depuis ledit support de fermentation pour le transférer directement sur la sole chaude du four en vue de sa cuisson.

Un tel farinage connu a pour objet d'éviter que la pâte ne colle sur le support de fermentation sur lequel le pâton séjourne et éviter ainsi l'arrachement mécanique de morceaux de pâte au moment de leur prélèvement

De façon totalement différente, au sens de la présente invention, le farinage ne vise qu'à aspirer l'humidité du pâton présente sur le support de cuisson qui aura servi en même temps de support de fermentation. Ce farinage ne sert pas du tout pour décoller le produit, puisque cette étape s'effectue automatiquement pendant la cuisson, grâce à, d'une part, l'effet thermique de la chaleur sur le produit et, d'autre part, l'existence d'un revêtement ou traitement anti-adhérent sur la surface dudit support.

En somme, l'invention fait intervenir un farinage là où, actuellement, il n'y a pas lieu d'être avec la technique de cuisson sur plaque de cuisson.

Ainsi, ledit procédé consiste subsidiairement à fariner supérieurement ladite plaque préalablement à la dépose desdits pâtons. Et en particulier dans le cas de plaques à empreintes

En outre, afin d'assurer l'uniformité de ce farinage, en particulier lors des déplacements de la plaque, qu'elles soient planes ou à empreintes, en particulier pour assurer le non ruissellement de la farine le long des parois formant empreintes ou alvéoles vers le fond horizontal, ce qui résulte de la manutention des plaques, notamment les chocs et les vibrations subies par la plaque, ruissellement amplifié par le revêtement antiadhésif, l'invention peut aussi envisager une étape supplémentaire d'humidification dudit revêtement avant le farinage. La couche de farinage vient alors adhérer uniformément, ne créant pas d'amas résultant de la manutention de la plaque, notamment les chocs qu'elle subit qui provoqueraient des tas de farine.

Ainsi, le procédé consiste subsidiairement à humidifier supérieurement ladite plaque préalablement au farinage.

L'invention concerne aussi un dispositif de cuisson, de type four, pour la mise en œuvre de ce procédé de cuisson de produits de boulangerie, pâtisserie ou viennoiserie, en particulier des étapes préalables de préchauffage et/ou farinage et/ou humidification avant farinage de plaque support de cuisson.

Plus particulièrement, un tel dispositif comprend au moins une enceinte de cuisson au moins pourvue d'une entrée, des moyens de dépose de pâtons sur une plaque support de cuisson et des moyens de transport de ladite plaque support depuis lesdits moyens de dépose vers ladite enceinte via ladite entrée. Il se caractérise en ce que lesdits moyens de transport sont pourvus au moins sur une partie de leur longueur d'au moins un espacement de chauffage, et en ce qu'il comprend des moyens de préchauffage direct au moins de la face inférieure de ladite plaque au moins au travers de chaque espacement de chauffage desdits moyens de transport, lesdits moyens de préchauffage étant situés au niveau de ladite entrée.

Selon l'invention lesdits moyens de transport se présentent sous la forme d'au moins deux chaînes sans fin, espacées latéralement, ménageant entre elles ledit espacement de chauffage.

Ainsi, au travers de cet espacement entre les chaînes des moyens de transport, le préchauffage s'effectue sans obstacle, en chauffant par convexion directement le dessous de la plaque.

Lesdits moyens de préchauffage peuvent se présenter sous la forme d'un poste de préchauffage s'étendant au moins sur une première portion située au niveau de ladite entrée, de manière à assurer sur une première partie desdits moyens de transport ledit préchauffage par convexion.

Ledit poste de préchauffage peut s'étendre sur une seconde portion fermée située à l'intérieur de ladite enceinte, de manière à assurer un chauffage complémentaire par rayonnement.

Ledit dispositif peut comprendre en amont desdits moyens de préchauffage, des moyens de farinage de la face supérieure de ladite plaque.

Préférentiellement, ce dispositif peut comprendre en amont desdits moyens de farinage, des moyens d'humidification de la face supérieure de ladite plaque.

D'autres caractéristiques et avantages de l'invention ressortiront de la description détaillée qui va suivre des modes de réalisation non limitatifs de l'invention, en référence aux figures annexées, dans lesquelles :

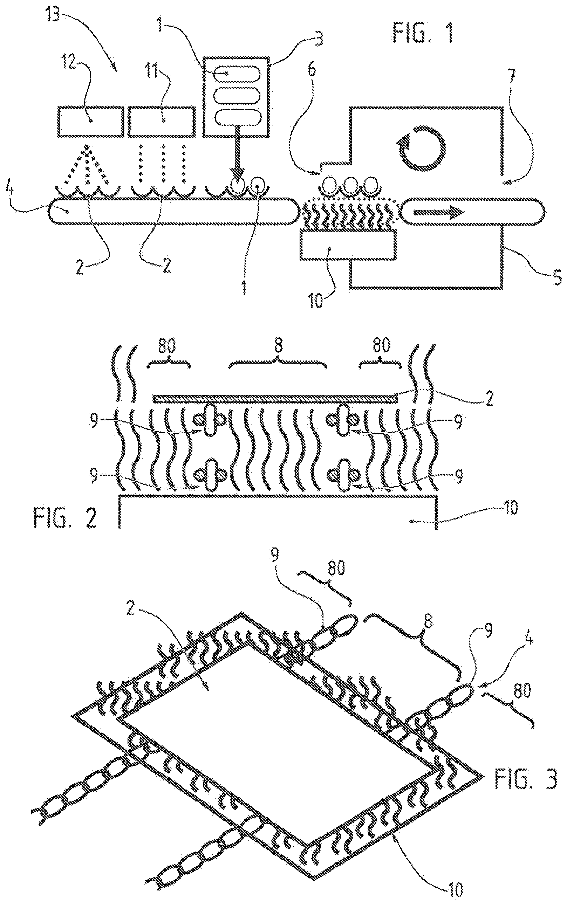

- la figure 1 représente une vue schématisée de principe de la mise en œuvre du procédé selon un mode particulier de l'invention, montrant les différentes étapes de traitement de la plaque support de cuisson avec son préchauffage en entrée et sa cuisson au sein d'un four ;
- la figure 2 représente une vue schématisée selon une coupe verticale de l'étape de préchauffage, montrant des moyens de transport sous forme de chaînes sur lesquelles est posée une plaque support et entre lesquelles est ménagé un espacement, assurant le chauffage direct par convexion de la plaque de cuisson par le dessous au travers de cet espacement ;
- la figure 3 représente une vue schématisée en perspective de l'étape de préchauffage de la figure 2, avec ledit espacement de chauffage des moyens de transport ; et

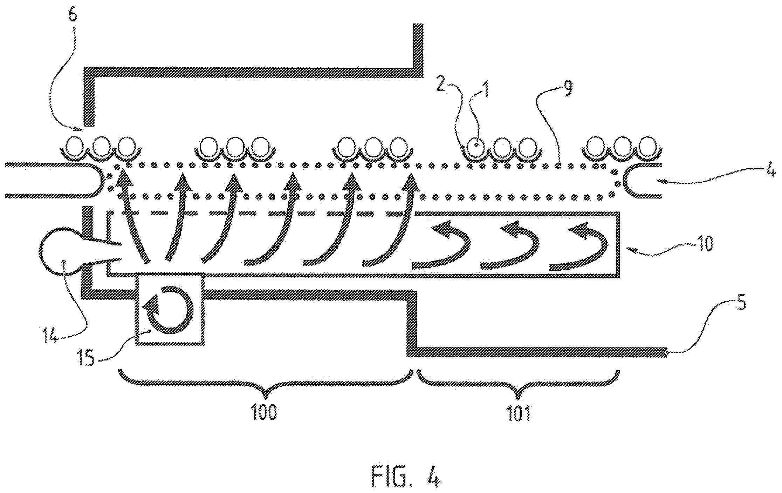

- la figure 4 représente schématiquement une vue selon une coupe verticale longitudinale d'une partie du dispositif selon l'invention, montrant un mode spécifique de réalisation du poste de préchauffage située à l'entrée de l'enceinte de cuisson, avec une première portion dédiée au préchauffage par convexion et une seconde portion dédiée à un chauffage complémentaire par rayonnement à l'intérieur de ladite enceinte.

La présente invention concerne la cuisson de produits de boulangerie, viennoiserie ou pâtisserie. De tels produits se présentent avant cuisson sous la forme de pâtons 1, obtenus par division d'une pâte.

En vue de leur traitement, ces pâtons 1 sont déposés sur une plaque 2 de cuisson constituant un support qui peut être plus aisément manutentionné. Cette dépose des pâtons 1 s'effectue au travers d'un poste de dépose 3, en amont de la cuisson. En outre, après la dépose, les pâtons 1 peuvent subir une étape de fermentation finale, d'une durée variable, préalablement à la cuisson. Cette fermentation se situe donc entre la dépose et la cuisson, comme le montre l'interruption du convoyeur modélisée schématiquement sur la figure 1.

Au moment de leur cuisson, les plaques 2 chargées de pâtons 1 sont acheminées par l'intermédiaire de moyens de transport 4, notamment sous forme d'au moins un convoyeur, de préférence plusieurs aboutés, s'étendant le long de la ligne de production, depuis le poste de dépose 3 vers une enceinte de cuisson 5 au travers d'une entrée 6. Comme évoqué précédemment, une étape intermédiaire de fermentation peut s'intercaler entre la dépose et cette cuisson. Après cuisson, lesdites plaques 2 peuvent sortir de l'enceinte par l'intermédiaire d'une sortie 7.

En outre, ladite enceinte 5 peut être constituée d'au moins un four dédié à la cuisson des pâtons en fonction de la pâte les constituant et du produit final à obtenir après cuisson. Selon le schéma de principe de la figure 1, ladite enceinte 5 s'apparente à un four tunnel traversé par lesdits moyens de transport 4.

De façon essentielle, dans le cadre de la présente invention, chaque plaque 2 est pleine. En somme, elle est constituée d'un matériau support, destiné à recevoir les pâtons 1, dépourvu d'orifice ou de perforation destiné au passage d'un fluide ascendant de chauffage par convexion ou rayonnement provenant de la sole de l'enceinte de cuisson 5. Ledit matériau s'apparente alors à au moins une tôle ou plusieurs espacées, pouvant être conformées de différentes façons, notamment plane, en creux ou goulottes ou gouttières.

Avantageusement, afin d'améliorer la cuisson des pâtons 1 de chaque plaque 2, l'invention prévoit d'effectuer directement un chauffage de chaque plaque 2 préalablement à la cuisson. Ce chauffage direct se veut par convexion.

Pour ce faire, tout d'abord, le procédé selon l'invention prévoit de déposer des pâtons 1 sur une plaque 2 support pleine, de transférer ladite plaque 2 chargée de pâtons 1 vers au moins une enceinte de cuisson 5, via une entrée 6. De façon essentielle, ce procédé consiste à préchauffer directement par le dessous ladite plaque 2 chargée au niveau d'un poste de préchauffage 10 situé au niveau de ladite entrée 6.

En passant au-dessus dudit poste de préchauffage 10, chaque plaque 2 est alors directement préchauffée par le dessous. Ce préchauffage direct s'effectue par convexion.

Pour ce faire, lesdits moyens de transport 4 sont pourvus d'au moins un espacement de chauffage 8. En somme, lesdits moyens de transport 4 possèdent une structure avec des ouvertures pour assurer directement le chauffage par convexion du dessous de la plaque 2.

En d'autres termes, les moyens de transport 4 se limitent à assurer la fonction de support de la plaque 2, pour assurer leur déplacement, en minimisant la zone d'appui en contact avec ladite plaque 2. Le reste étant ouvert, il permet une plus large diffusion de l'apport thermique lors du préchauffage.

On notera qu'une telle zone d'appui s'étend linéairement, le long desdits moyens de transport 4, d'une part, de façon continue sous forme de deux lignes de contact, parallèles entre elles ou convergentes, ou bien, d'autre part, de façon discontinue le long desdites deux lignes, aux niveaux de points d'appui espacés régulièrement ou non.

Selon l'invention, lesdits moyens de transport 4 se présentent sous la forme d'au moins deux chaînes 9 sans fin, espacées latéralement, ménageant entre elles ledit espacement de chauffage 8. Un nombre plus important de chaînes 9 peut être envisagé : trois, quatre ou davantage.

On notera que l'espacement de chauffage 8 peut aussi au moins partiellement consister aux zones latérales 80 situées extérieurement de part et d'autre desdites chaînes 9, à savoir latéralement de chaque côté, comme visible sur les figures 2 et 3.

En outre, les conceptions en chaînes 9 des moyens de transport 4 au niveau du poste de préchauffage 10 permet de limiter le transfert de chaleur par conduction, limitant les points de contact avec la face inférieure de chaque plaque 2.

De façon subsidiaire, le flux d'air chaud par convexion peut aussi traverser les chaînes 9 au niveau de leurs maillons.

De telles chaînes 9 sont montées autour de rouleaux de renvoi. Chaque chaîne 9 comprend un brin supérieur supportant chaque plaque 2 et assurant dans un sens l'acheminement de chaque plaque 2 au-dessus dudit poste de préchauffage 10, depuis un convoyeur amont vers un convoyeur aval, ainsi qu'un brin inférieur en retour en sens inverse.

En d'autres termes, les moyens de transport 4 peuvent comprendre un convoyeur sur la partie de longueur s'étendant au niveau dudit poste de préchauffage 10. Cette particularité permet d'avoir des convoyeurs classiques en amont et en aval de la ligne de production, mais aussi de conserver les chaînes 9 à la température de préchauffage, puisqu'elles restent, à l'aller comme au retour, dans le volume de préchauffage par convexion au-dessus dudit poste 10.

De plus, lesdites chaînes 9 sont espacées selon la largeur des moyens de transport 4 en fonction de la dimension des plaques 2 à transporter et de l'espacement 8 à ménager.

Comme visible sur le schéma de principe de la figure 1, ledit poste de préchauffage 10 s'étend à l'entrée 6 du four. De préférence, il s'étend en partie sur l'intérieur et sur l'extérieur de l'enceinte 5. Selon d'autres modes de réalisation, ledit poste de préchauffage 10 peut être situé entièrement à l'intérieur de l'enceinte 5, ou bien extérieurement au sein d'une autre enceinte dédiée et prévue à cet effet. En outre, la face supérieure dudit poste 10 dédiée au préchauffage est située à l'intérieur de l'enceinte de cuisson 5, de sorte que les calories dégagées en face supérieure dudit poste de préchauffage 10 restent à l'intérieur de l'enceinte 5.

Préférentiellement, ledit poste de préchauffage 10 s'étend depuis une première section ou portion disposée à l'extérieur de l'enceinte de cuisson 5 assurant le début du préchauffage essentiellement par convexion, jusqu'à une seconde section rentrant à l'intérieur de ladite enceinte 5, participant à la poursuite de la montée en température de la plaque 2 par rayonnement, limitant ledit apport par convexion sur cette seconde section, voire sans aucun apport. En outre, arrêter la convexion à l'entrée de l'enceinte 5 permet de ne pas créer de mouvements d'air pour ne pas perturber une éventuelle prise de vapeur injectée à basse pression à l'intérieur de ladite enceinte de cuisson 5.

Pour ce faire, selon le mode de réalisation représenté sur la figure 4, ledit poste de préchauffage 10 s'étend intégralement à l'intérieur de l'enceinte 5. Cette dernière présente une partie située du côté de l'entrée 6 et déportée par rapport à son volume global où s'effectue la cuisson des produits. C'est au sein de cette partie déportée qu'est effectuée l'opération de préchauffage, avant la cuisson. A cet effet, ledit poste 10 comprend une première portion 100 située à l'intérieur du volume de la partie déportée. Il comprend aussi une seconde portion 101, située dans le prolongement de ladite première portion 100 et s'étendant en partie au sein de ladite partie décrochée et sur une majeure partie de sa longueur au sein du volume global de l'enceinte 5.

De plus, la première portion 100 est dédiée au préchauffage par convexion. Pour ce faire, un flux de fluide caloporteur est mis en circulation à l'intérieur du poste 10 et traverse la paroi supérieure de ladite première portion 100 par des orifices ou fentes traversantes ménagées à cet effet. Le fluide peut alors venir traverser les moyens de transport 4, aux niveaux de l'espacement 8 ménagé entre lesdites chaînes 9, pour chauffer directement les plaques 2 par le dessous.

La seconde portion 101 du poste 10 est, quant à elle, entièrement fermée, empêchant le fluide de s'échapper. Les parois sont alors chauffées, en particulier la paroi supérieure, assurant sur cette seconde portion 101 un chauffage complémentaire par rayonnement, essentiellement au niveau du volume global de l'enceinte 5.

En outre, pour assurer le chauffage et la mise en circulation dudit fluide, le poste de préchauffage 10 est équipé de moyens adaptés, comme un brûleur 14. Ce dernier expulse des gaz chauffés à l'intérieur du poste 10, directement au sein de la première portion 100.

Le poste 10 comprend aussi des moyens de mise en circulation dudit fluide caloporteur, sous la forme notamment d'au moins un ventilateur 15. Ce dernier est positionné et souffle en sortie dudit brûleur 14.

On notera que l'air soufflé par ledit ventilateur 15 peut être repris à l'intérieur dudit poste 10 et/ou à l'intérieur de l'enceinte 5, notamment de sa partie décrochée.

Une alternative au système par convexion consiste à exposer le dessous de la plaque sur l'ensemble de la longueur du poste de préchauffage 10 à une chaleur de rayonnement, soit d'origine électrique soit par tout moyen de chauffage adapté.

Comme évoqué précédemment, ledit poste de préchauffage 10 peut délivrer un chauffage de tout type, préférentiellement par convexion, chauffant le dessous de chaque plaque 2 au travers de l'espacement de chauffage 8, ainsi que des espaces latéraux 80, desdits moyens de transport 4, lors du passage de chaque plaque 2.

A ce titre, ledit préchauffage peut consister à soumettre directement ladite plaque 2 à une forte élévation de température pendant une durée limitée. En d'autres termes, le poste de préchauffage 10 peut délivrer une température suffisante pour élever la température de la plaque 2 à une température équivalente à celle de cuisson à l'intérieur de l'enceinte 5. Une telle température équivalente peut correspondre à une température de plus ou moins 100 degrés Celsius (°C), de 1 à 5°C près.

De plus, l'élévation de température dépend du temps de passage de chaque plaque 2 au niveau dudit poste de préchauffage 10. Cette durée limitée dépend notamment de la vitesse des moyens de transport 4. Elle peut être de quelques secondes, n'excédant 30 secondes.

Selon un mode de réalisation préférentiel, le préchauffage consiste en une élévation de température d'environ 75 à 80 °C, à plus ou moins 5 °C près. Indépendamment, cette élévation peut s'effectuer pendant une durée ne dépassant pas 30 secondes, de préférence pendant une durée d'approximativement 20 secondes. Pour ce faire, la quantité d'énergie fournie correspond à une température d'environ 80 à 85°C, pour une plaque dont la température initiale est à température ambiante, soit approximativement entre 20 et 25 °C.

Ainsi, ce préchauffage permet d'amener rapidement la plaque 2 à une température plus élevée, mais inférieure à celle de cuisson à l'intérieur du four (globalement comprise entre 180 et 250 °C) permettant toutefois de soumettre uniquement le dessous des pâtons 1 à un début de cuisson, avant ou au moment de l'entrée dans l'enceinte 5 en vue de la cuisson du reste desdits pâtons 1. Cette hausse inférieure de température assure aussi une première évacuation de l'humidité des pâtons 1 et permet d'éviter la condensation de la vapeur sur la plaque 2 qui aura dépassé la température du point de rosée (de l'ordre de 75°C, compte tenu du taux hygrométrique à l'intérieur de l'enceinte 5 du four).

Selon une caractéristique additionnelle, afin d'améliorer cette évacuation, notamment par évaporation, de ladite humidité, le procédé selon l'invention peut consister à fariner supérieurement ladite plaque 2 préalablement à la dépose desdits pâtons 1. Comme visible sur la figure 1 de principe, un poste de farinage 11 vient déposer une couche de farine, notamment sous forme d'une fine pellicule, sur l'intégralité de la surface de la plaque 2, à savoir de son matériau support. Ce dépôt peut s'effectuer de différentes façons, notamment par saupoudrage du dessus de la plaque 2, de manière à recouvrir uniformément la face supérieure de ladite plaque 2.

Cette pellicule de farine permet d'aspirer une partie de l'humidité des pâtons 1 lorsqu'ils sont déposés au sein des logements de la plaque 2. Cette étape peut se dérouler longuement au cours de la fermentation, lorsque les pâtons 1 sont au repos après avoir été déposés sur la plaque 2.

Selon une autre caractéristique additionnelle, afin d'améliorer la tenue de la pellicule de farine sur la surface de la plaque 2, le procédé peut consister à humidifier supérieurement ladite plaque 2 préalablement au farinage. Cette humidification s'effectue alors au niveau d'un poste d'humidification 12, situé en amont du poste de farinage 11. Cette humidification peut s'effectuer de différentes façons, notamment par pulvérisation d'un fluide, de préférence de l'eau. Dès lors, la farine vient adhérer à la surface de la plaque 2 au moment du farinage, évitant qu'elle ne crée des tas ou des amas, notamment par écoulement sur les parois vers le fond des logements 9, au cours de la manutention de la plaque 2.

L'invention concerne aussi le dispositif 13 de mise en œuvre du procédé de cuisson précédemment décrit. Un tel dispositif 13 comprend donc au moins une enceinte de cuisson 5 au moins pourvue d'une entrée 6. Il comprend aussi des moyens de dépose, notamment sous la forme du poste de dépose 3, de pâtons 1 sur une plaque support 2 et des moyens de transport 4 de ladite plaque support 2 depuis lesdits moyens de dépose vers ladite enceinte 5 via ladite entrée 6.

Comme évoqué précédemment, lesdits moyens de transport 4 limitent la zone de contact avec la plaque 2, en ménageant en leur sein un espacement de chauffage 8.

Ces moyens de transport 4 se présentent sous la forme d'au moins deux chaînes 9 sans fin. Ces chaînes 9 s'étendent parallèlement, séparées en largeur de manière à ménager ledit espacement 8, ainsi que les espaces latéraux 80.

De façon essentielle, ledit dispositif 13 comprend des moyens de préchauffage, notamment sous la forme du poste de préchauffage 10, au moins de la face inférieure de ladite plaque 2. De plus, lesdits moyens de préchauffage sont situés au niveau de ladite entrée 6.

Selon une caractéristique additionnelle, ledit dispositif 13 peut aussi comprendre en amont desdits moyens de préchauffage, des moyens de farinage de la face supérieure de ladite plaque 2.

Selon une autre caractéristique additionnelle, ledit dispositif 13 peut encore comprendre en amont desdits moyens de farinage, des moyens d'humidification de la face supérieure de ladite plaque 2.

Ainsi, la présente invention assure une cuisson améliorée de produits de boulangerie, viennoiserie et pâtisserie sur une plaque support 2 pleine, offrant un aspect esthétique du produit fini comme s'il avait été cuit sur sole, qu'il s'agisse d'une sole en acier ou en pierre. Cet objectif est obtenu au travers d'un préchauffage direct par convexion de la plaque 2 avant la cuisson, grâce à un espacement de chauffage 8 prévu au sein desdits moyens de transport 4. De plus, l'invention offre plusieurs solutions combinées et complémentaires pour évacuer l'humidité présente en partie inférieure du pâton 1 pour obtenir un tel résultat.

L'invention tient compte des caractéristiques très spécifiques nécessaires à la cuisson avec un préchauffage dédié et se limitant aux produits de boulangerie, pâtisserie et viennoiserie, reposant sur des plaques support de cuisson 2.

## Revendications

1. Procédé de cuisson de produits de boulangerie, viennoiserie et pâtisserie, dans lequel :
- on dépose des pâtons (1) sur une plaque (2) support pleine ;
- on transfère ladite plaque (2) chargée de pâtons (1) vers au moins une enceinte (5) de cuisson, via une entrée (6) ;
**caractérisé en ce qu'**il consiste à :
- placer ladite plaque sur des moyens de transport (4) se présentant sous la forme d'au moins deux chaînes sans fin, espacées latéralement, ménageant entre elles au moins un espacement de chauffage conçu apte à permettre le chauffage direct par convection d'au moins le dessous de la plaque (2) support pleine ; et
- préchauffer directement par le dessous ladite plaque (2) au travers de chaque espacement de chauffage, au niveau d'un poste de préchauffage (10) situé au niveau de ladite entrée (6).

2. Procédé de cuisson selon la revendication 1, **caractérisé par le fait que** ledit préchauffage consiste à soumettre ladite plaque (2) à une forte élévation de température de 75 à 80 °C.

3. Procédé de cuisson selon l'une quelconque des revendications 1 ou 2, **caractérisé par le fait que** ledit préchauffage consiste à soumettre ladite plaque (2) à une forte élévation de température pendant une durée se limitant à 30 secondes, de préférence une durée de 20 secondes.

4. Procédé de cuisson selon l'une quelconque des revendications 1 à 3, **caractérisé par le fait que** ledit préchauffage s'effectue par convection sur une première portion dudit poste de préchauffage (10).

5. Procédé de cuisson selon la revendication 4, **caractérisé par le fait que** ledit préchauffage s'effectue par rayonnement sur une seconde portion dudit poste de préchauffage (10).

6. Procédé de cuisson selon l'une quelconque des revendications précédentes, **caractérisé par le fait qu'**il consiste à fariner supérieurement ladite plaque (2) préalablement à la dépose desdits pâtons (1).

7. Procédé de cuisson selon la revendication 6, **caractérisé par le fait qu'**il consiste à humidifier supérieurement ladite plaque (2) préalablement au farinage.

8. Dispositif (13) de mise en œuvre du procédé de cuisson selon l'une quelconque des revendications précédentes, comprenant au moins une enceinte (5) de cuisson au moins pourvue d'une entrée (5), de moyens de dépose de pâtons (1) sur une plaque support (2) et des moyens de transport (4) de ladite plaque support (2) depuis lesdits moyens de dépose vers ladite enceinte (5) via ladite entrée (6), **caractérisé en ce que** lesdits moyens de transport (4) se présentent sous la forme d'au moins deux chaînes sans fin, espacées latéralement, ménageant entre elles au moins un espacement de chauffage (8) conçu apte à permettre le chauffage direct d'au moins le dessous de la plaque (2) support pleine, et **en ce qu'**il comprend des moyens de préchauffage direct par convection au moins de la face inférieure de ladite plaque (2) au moins au travers de chaque espacement de chauffage (8) desdits moyens de transport (4), lesdits moyens de préchauffage étant situés au niveau de ladite entrée (6).

9. Dispositif (13) selon la revendication 8, **caractérisé par le fait que** lesdits moyens de préchauffage se présentent sous la forme d'un poste de préchauffage (10) s'étendant au moins sur une première portion située au niveau de ladite entrée (6), de manière à assurer sur une première partie desdits moyens de transport (4) ledit préchauffage par convection.

10. Dispositif (13) selon la revendication 9, **caractérisé par le fait que** ledit poste de préchauffage (10) s'étend sur une seconde portion fermée située à l'intérieur de ladite enceinte (5), de manière à assurer un chauffage complémentaire par rayonnement.

11. Dispositif (13) selon l'une quelconque des revendications 8 à 10, **caractérisé par le fait qu'**il comprend en amont desdits moyens de préchauffage, des moyens de farinage de la face supérieure de ladite plaque (2).

12. Dispositif selon la revendication 11, **caractérisé par le fait qu'**il comprend en amont desdits moyens de farinage, des moyens d'humidification de la face supérieure de ladite plaque (2).

## Patentansprüche

1. Verfahren zum Backen von Brot, Feinbackwaren und Backwaren, bei dem:
- Teigstücken (1) auf eine feste Trägerplatte (2) abgelegt werden;
- die besagte mit Teigstücken (1) beladene Trägerplatte (2) über einen Einlass (6) in mindestens eine Backkammer (5) geführt wird;
**dadurch gekennzeichnet, dass** es darin besteht:
- die besagte Platte auf Transportmittel (4), die als mindestens zwei seitlich von einander beabstandete endlose Ketten ausgestaltet sind, zu legen, wobei zwischen ihnen mindestens ein Heizungsraum geschaffen wird, der geeignet ausgestaltet ist, eine direkte Heizung durch Konvektion von wenigstens der Unterseite der festen Trägerplatte (2) zu ermöglichen; und
- die besagte Platte (2) von unten durch jeden Heizungsraum im Bereich einer im Bereich des besagten Einlasses (6) befindlichen Vorheizungsstation (10) hindurch direkt vorzuheizen.

2. Backverfahren nach Anspruch 1, **dadurch gekennzeichnet, dass** das besagte Vorheizen darin besteht, die besagte Platte (2) einem starken Temperaturanstieg von 75 bis 80°C auszusetzen.

3. Backverfahren nach irgendeinem der Ansprüche 1 oder 2, **dadurch gekennzeichnet, dass** das besagte Vorheizen darin besteht, die besagte Platte (2) während einem auf 30 Sekunden begrenzten Zeitraum, vorzugsweise einem Zeitraum von 20 Sekunden, einem starken Temperaturanstieg auszusetzen.

4. Backverfahren nach irgendeinem der Ansprüche 1 bis 3, **dadurch gekennzeichnet, dass** das besagte Vorheizen durch Konvektion auf einem ersten Teil der besagten Vorheizungsstation (10) durchgeführt wird.

5. Backverfahren nach Anspruch 4, **dadurch gekennzeichnet, dass** das besagte Vorheizen durch Strahlung auf einem zweiten Teil der besagten Vorheizungsstation (10) durchgeführt wird.

6. Backverfahren nach irgendeinem der vorhergehenden Ansprüche, **dadurch gekennzeichnet, dass** es darin besteht, die obere Fläche der besagten Platte (2) vor dem Ablegen der besagten Teigstücke (1) mit Mehl zu bestreuen.

7. Backverfahren nach Anspruch 6, **dadurch gekennzeichnet, dass** es darin besteht, die obere Fläche der besagten Platte (2) vor dem Bestreuen mit Mehl zu befeuchten.

8. Vorrichtung (13) zum Durchführen des Backverfahrens nach irgendeinem der vorhergehenden Ansprüche, umfassend mindestens eine Backkammer (5), die mindestens mit einem Eingang (5), Mitteln zum Ablegen von Teigstücken (1) auf eine Trägerplatte (2) und Mitteln zum Befördern (4) der Trägerplatte (2) von den besagten Mitteln zum Ablegen zu der besagten Kammer (5) über den besagten Einlass (6) versehen ist, **dadurch gekennzeichnet, dass** die besagten Beförderungsmittel (4) als mindestens zwei seitlich von einander beabstandete endlose Ketten ausgestaltet sind, wobei zwischen ihnen mindestens ein Heizungsraum vorgesehen ist, der geeignet ausgestaltet ist, eine direkte Heizung durch Konvektion von wenigstens der unteren Fläche der festen Trägerplatte (2) zu ermöglichen, und dass sie Mittel zum direkten Vorheizen durch Konvektion von mindestens der unteren Fläche der besagten Platte (2) mindestens durch jeden Heizungsraum (8) der besagten Beförderungsmittel (4) hindurch umfasst, wobei sich die besagten Vorheizungsmittel im Bereich des Einlasses (6) befinden.

9. Vorrichtung (13) nach Anspruch 8, **dadurch gekennzeichnet, dass** die Vorheizungsmittel als eine Vorheizungsstation (10) ausgestaltet sind, die sich mindestens über einen ersten Teil erstreckt, der sich im Bereich des Einlasses befindet (6), sodass auf einem ersten Teil der besagten Beförderungsmittel (4) das besagte Vorheizen durch Konvektion gesichert wird.

10. Vorrichtung (13) nach Anspruch 9, **dadurch gekennzeichnet, dass** sich die besagte Vorheizungsstation (10) über einen zweiten geschlossenen Teil erstreckt, der sich innerhalb der besagten Kammer (5) befindet, sodass eine ergänzende Heizung durch Strahlung gesichert wird.

11. Vorrichtung (13) nach orgendeinem der Ansprüche 8 bis 10, **dadurch gekennzeichnet, dass** sie stromaufwärts von den besagten Vorheizungsmitteln Mittel zum Bestreuen mit Mehl der oberen Fläche der besagten Platte (2) umfasst.

12. Vorrichtung nach Anspruch 11, **dadurch gekennzeichnet, dass** sie stromaufwärts von den besagten Mitteln zum Bestreuen mit Mehl Mittel zum Befeuchten der Oberseite der besagten Platte (2) umfasst.

## Claims

1. Method for baking bakery, Viennese pastry and pastry products, wherein:
- dough pieces (1) are deposited on a solid support plate (2);
- said plate (2) loaded with dough pieces (1) is transferred to at least one baking chamber (5), through an inlet (6);
wherein it consists in:
- placing said plate on transport means (4) being in the form of at least two endless chains, spaced apart laterally, leaving between them at least one heating space designed capable of permitting the direct heating by convection of at least the underside of the solid support plate (2); and
- directly preheating from below said plate (2) through each heating space, at the level of a preheating station (10) located at the level of said inlet (6).

2. Baking method according to claim 1, wherein said preheating consists in subjecting said plate (2) to a strong rise in temperature of 75 to 80°C.

3. Baking method according to any one of claims 1 or 2, wherein said preheating consists in subjecting said plate (2) to a strong rise in temperature for a period limited to 30 seconds, preferably to a 20 seconds' period.

4. Baking method according to any one of claims 1 to 3, wherein said preheating is carried out by convection on a first portion of said preheating station (10).

5. Baking method according to claim 4, wherein said preheating is carried out by radiation on a second portion of said preheating station (10).

6. Baking method according to any one of the preceding claims, wherein it consists in spreading flour on the upper face of said plate (2) before depositing said dough pieces (1).

7. Baking method according to claim 6, wherein it consists in humidifying the upper face of said plate (2) before spreading flour.

8. Device (13) for implementing the baking method according to any one of the preceding claims, comprising at least one baking chamber (5) provided with at least one inlet (5), means for depositing dough pieces (1) on a support plate (2) and means for transporting (4) said support plate (2) from said means for depositing to said chamber (5) through said inlet (6), wherein said transport means (4) are in the form of at least two endless chains, spaced apart laterally, leaving between them at least one heating space (8) designed capable of permitting the direct heating of at least the underside of the solid support plate (2), and wherein it comprises means for the direct preheating by convection of at least the lower face of said plate (2) at least through each heating space (8) of said transport means (4), said preheating means being located at the level of said inlet (6).

9. Device (13) according to claim 8, wherein said preheating means are in the form of a preheating station (10) extending at least over a first portion located at the level of said inlet (6), so as to ensure on a first portion of said transport means (4) said preheating by convection.

10. Device (13) according to claim 9, wherein said preheating station (10) extends over a second closed portion located inside said chamber (5), so as to ensure a complementary heating by radiation.

11. Device (13) according to any one of claims 8 to 10, wherein it comprises, upstream of said preheating means, means for spreading flour on the upper face of said plate (2).

12. Device according to claim 11, wherein it comprises, upstream of said means for spreading flour, means for humidifying the upper face of said plate (2).
